# EUROPÄISCHE PATENTSCHRIFT

(11) **EP 2 864 744 B1**
(45) Veröffentlichungstag und Bekanntmachung des Hinweises auf die Patenterteilung: **03.04.2019**
(21) Anmeldenummer: 13733223.5
(22) Anmeldetag: 20.06.2013
(51) Int. Cl.: G01L 1/16, G01L 5/16

(54) **MESSELEMENT, MESSKÖRPER UND MESSANORDNUNG ZUM MESSEN EINER KRAFT UND VERWENDUNG EINES SOLCHEN MESSKÖRPERS**
MEASURING ELEMENT, MEASURING BODY AND MEASURING ARRANGEMENT FOR MEASURING A FORCE, AND USE OF SUCH A MEASURING BODY
ÉLÉMENT DE MESURE, CORPS DE MESURE ET ENSEMBLE DE MESURE SERVANT À MESURER UNE FORCE ET UTILISATION D'UN CORPS DE MESURE DE CE TYPE

(30) Priorität: 20.06.2012 CH 865122012
(43) Veröffentlichungstag der Anmeldung: 29.04.2015
(73) Patentinhaber: Kistler Holding AG, 8408 Winterthur (CH)
(72) Erfinder: KOHLER, Denis, CH-8413 Neftenbach (CH)
(86) Internationale Anmeldenummer: PCT/CH2013/000108
(87) Internationale Veröffentlichungsnummer: WO 2013/188989

(56) Entgegenhaltungen:
- EP-A1- 0 012 867
- EP-A1- 0 270 693
- EP-A1- 0 316 498
- WO-A1-2007/024225
- WO-A2-2007/143870
- CH-A- 388 659
- CH-A- 500 602
- DE-A1- 1 929 478
- DE-A1- 3 440 670
- DE-C1- 4 217 766

## Beschreibung

### Technisches Gebiet

Die Erfindung betrifft ein piezoelektrisches Messelement aus einem Kristall der Symmetrieklasse 32, insbesondere aus Quarz, flach ausgestaltet in einer Ebene x-y zum Einbauen in einen Messkörper zum Messen einer Kraft Fz, welche senkrecht auf die Ebene x-y wirkt. Eine solche Kraft Fz verursacht eine Ladungsansammlung auf den Kraft aufnehmenden Flächen des Messelements, welche mit Elektroden versehen ist. Die Erfindung betrifft dabei nur solche Messelemente, bei denen bei einer Messung Querkräfte Fxy orthogonal zur Kraft Fz auf den Messkörper zu erwarten sind, welche ein Fehlsignal am Messelement erzeugen.

### Stand der Technik

Druck- oder Kraftsensoren werden in vielerlei Anwendungen eingesetzt. Oft sind solche Sensoren gleichzeitig verschiedenen Kräften ausgesetzt, namentlich Kräften aus allen drei kartesischen Richtungen x, y, z, Schubkräften und Momenten. Beispiele sind Messungen von Zerspankräften bei Herstellverfahren, insbesondere beim Fräsen, Hobeln und dergleichen, bei denen eine translatorische Bewegung in x-y Richtung unter Kraftaufwendung durchgeführt wird. Je nach Anwendung sollen mehrere dieser Kräfte gemessen werden. Insbesondere von Interesse sind dabei in der Regel die Kräfte in z-, x- und y-Richtung sowie das Moment Mz in z-Richtung, wobei sich die zu bearbeitende Oberfläche des Werkstückes in x-y Richtung erstreckt und deren Flächennormale in z-Richtung verläuft.

Bei solchen Messungen müssen in jedem Fall die einzelnen Kraftkomponenten unabgängig der anderen Kräfte oder Momente erfasst werden. Zu diesem Zweck umfasst ein Sensor einen Messkörper mit mehreren einzelnen Messelementen, die jeweils eine Komponente erfassen. Die Messelemente sind in der Regel in Scheiben oder Lochscheiben ausgebildet und bestehen aus piezoelektrischem Material. Proportional zu einer Krafteinwirkung in eine gewisse Richtung werden eine gewisse Anzahl positiver und negativer Ladungseinheiten an gegenüberliegende Oberflächen der Messelemente abgegeben. Elektroden auf den jeweiligen Oberflächen der Messelemente sammeln diese Ladungen, welche schliesslich in speziell isolierten Leitungen zu Ladungsumwandlern resp. Verstärkern gebracht werden. Die Messelemente müssen unter Vorspannung im Sensor oder im Messkörper verbaut werden, damit auch negative Kräfte gemessen werden können und damit der Kontakt zu den Elektroden stets gewährleistet ist.

Um mehrere Kraftkomponenten oder Momente gleichzeitig zu messen, können piezoelektrische oder piezoresistive Platten unterschiedlicher Art verwendet werden. So ist es bekannt, in einem Mehrkomponentensensor unterschiedliche Platten aufeinander zu stapeln, wobei jede Platte nur eine Kraftkomponente oder eine Momentkomponente erfassen kann und relativ unempfindlich ist gegenüber allen anderen Einwirkungen von Kräften und Momenten. Diese Platten sind in der Regel scheiben- oder lochscheibenförmig. Der Vorteil von lochscheibenförmigen Platten besteht darin, dass mittig ein Montagebolzen angebracht werden kann.

Nun hat es sich aber gezeigt, dass insbesondere bei piezoelektrischen Messelementen aus einem Kristall der Symmetriegruppe 32, welche Kräfte Fz senkrecht auf die Plattenflächen messen sollen, ein Übersprechen auftritt, wenn Querkräfte Fxy auftreten, welche orthogonal zu Fz angreifen und sich aus Komponenten Fx und Fy zusammensetzen. Diese Fz-Messelemente erzeugen beim Auftreten einer solchen Querkraft Fxy Störsignale, indem Ladungen in gewissen Mengen an die Oberflächen abgegeben werden, welche mit den Elektroden in elektrischem Kontakt stehen.

Ein so entstandenes Störsignal verfälscht das resultierende Messsignal, da es das Signal überlagert, welches allein auf Grund der Kraft Fz entsteht. Das Störsignal kann durchaus 5 bis 10% des Nennwerts der Komponente Fxy betragen, welche von dem Messelement nicht erfasst werden sollte. So entsteht ein systematischer Messfehler. Insbesondere dann, wenn die Querkraft Fxy im Betrag um ein Vielfaches grösser ist als die Normalkraft Fz, wie dies beim Fräsen oder Hobeln der Fall ist, kann bei der Messung von Fz das durch Übersprechen entstandene Störsignal enorm gross sein im Vergleich zum Signal, das von Fz verursacht wird und dessen Betrag mit dem Messelement gemessen werden sollte.

Die Störsignale in Richtung Fz durch Querkraft Fxy treten nur bei den genannten Messelementen auf, die aus einem piezoelektrischen Kristall der Symmetriegruppe 32 geschnitten werden. Die Kristallplatten entstehen schliesslich durch Schnitte des Kristalls, welche senkrecht zur kristallographischen X-Achse erfolgt sind. So entstehen Kristallplatten mit Longitudinaleffekt, welche sich besonders gut zum Messen von Kräften eignen, weswegen sie bevorzugt in den genannten Anwendungen verwendet werden. Leider treten bei solchen Messelementen das genannte Übersprechen und die damit verbundene Erzeugung der Störsignale in den genannten Anwendungen auf.

Andere Messelemente mit anderer kristallographischen Orientierung zeigen ein anderes Verhalten beim Auftreten von Querkräften Fxy orthogonal zur Kraft Fz auf das Messelement und sind daher nicht Gegenstand der vorliegenden Erfindung.

Zu diesen anderen Messelementen gehören beispielsweise andere piezoelektrische Materialien und aus einer anderen Punktgruppe, Messelemente aus Materialien, die keine Kristalle sind, beispielsweise aus piezoresistiven Materialien oder aus Piezokeramik. Zu diesen anderen Messelementen gehören auch Messelemente aller Art, die für andere Anwendungen als zur Ermittlung einer senkrecht zur Plattenausrichtung auftretenden Kraft geschnitten sind, beispielsweise zum Ermitteln einer Beschleunigung oder eines Moments oder einer Schubkraft. Solche andere Messelemente sind jeweils nicht Gegenstand der vorliegenden Erfindung.

Aus der CH 472668 ist ein Mehrkomponentensensor genannt, der insbesondere auch Kräfte in Z-Richtung messen kann. Gleichzeitig auftretende Querkräfte in X- oder Y-Richtung können aber dabei eine Störkraft in die Z-Richtung verursachen, wodurch die Messung in diese Richtung verfälscht wird.

Die CH500602 befasst sich mit einem piezoelektrischen Mehrkomponenten-Kraftsensor, wobei Kristalle mit unterschiedlichen Orientierungen benutzt werden.

### Darstellung der Erfindung

Aufgabe der vorliegenden Erfindung ist es, ein Messelement eingangs beschriebener Art anzugeben, das ein reduziertes Übersprechen von Querkräften Fxy auf das Messelement aufweist, ohne dabei merklich an Belastbarkeit einzubüssen. Entsprechend sind ein Messkörper, eine Messanordnung und eine Verwendung eines solchen Messkörpers anzugeben, bei denen das Übersprechen jeweils stark reduziert ist. Zudem soll aufgezeigt werden, wie ein solches Messelement mit geringem Aufwand kostengünstig herstellbar ist.

Die Aufgabe wird gelöst durch die Kennzeichen der unabhängigen Patentansprüche.

Die der Erfindung zugrunde liegende Idee besteht darin, dass das erfindungsgemässe Messelement aus mindestens vier, vorzugsweise acht gleichartigen Messelement-Segmenten mit geraden Flanken besteht, wobei die Segmente in der x-y Ebene nebeneinander und durch schmale Spalte an den Flanken beabstandet voneinander nahe aneinander angeordnet sind, wobei sie zusammen die Form einer Scheibe oder Lochscheibe bilden. Zudem sollen erfindungsgemäss die Kristallausrichtungen, welche beispielsweise jeweils parallel zur kristallographischen Y-Achse des Kristalls verlaufen, in der x-y Ebene aller Segmente in dieselbe Richtung oder orthogonal zueinander ausgerichtet sein.

Dabei wird unter dem Begriff "gleichartig" verstanden, dass die Messelement-Segmente gleich beschaffen sind, demnach aus demselben Material bestehen, und insbesondere dieselben Formen, Abmessungen und Empfindlichkeiten bei einer Krafteinwirkung senkrecht zur x-y Ebene aufweisen. Durch die erfindungsgemässe Anordnung werden die Störsignale auf das Messelement, die von Querkräften Fxy verursacht werden, reduziert.

### Kurze Beschreibung der Zeichnungen

Im Folgenden wird die Erfindung unter Beizug der Zeichnungen näher erklärt. Es zeigen
- Fig. 1: eine schematische Aufsicht eines Messelements nach dem Stand der Technik;
- Fig. 2: eine schematische Aufsicht eines erfindungsgemässen Messelements mit vier Segmenten;
- Fig. 3: eine schematische Aufsicht eines erfindungsgemässen Messelements mit acht Segmenten;
- Fig. 4: eine schematische Ansicht eines erfindungsgemässen Messkörpers;
- Fig. 5: eine schematische Ansicht eines erfindungsgemässen Messelement-Paares, nebeneinander angeordnet;
- Fig. 6: eine schematische Ansicht einer erfindungsgemässen Messanordnung;
- Fig. 7: Als Fz erfasste Amplitude eines Störsignals durch eine Querkraft Fxy in Abhängigkeit der Übereinstimmung der Wirkungsrichtung α von Fxy mit der Kristallausrichtung
- a): bei einer vollen Quarzscheibe nach Fig. 1;
- b): in einem Messelement mit 4 Segmenten nach Fig. 2;
- c): in einem Messelement mit 8 Segmenten nach Fig. 3 und mit alternierenden Kristallausrichtungen.

### Wege zur Ausführung der Erfindung

Im Folgenden wird die Erfindung unter Bezugnahme auf die Figuren näher beschrieben. Dieselben Referenzzahlen stehen jeweils für dieselben Komponenten/Sachverhalte.

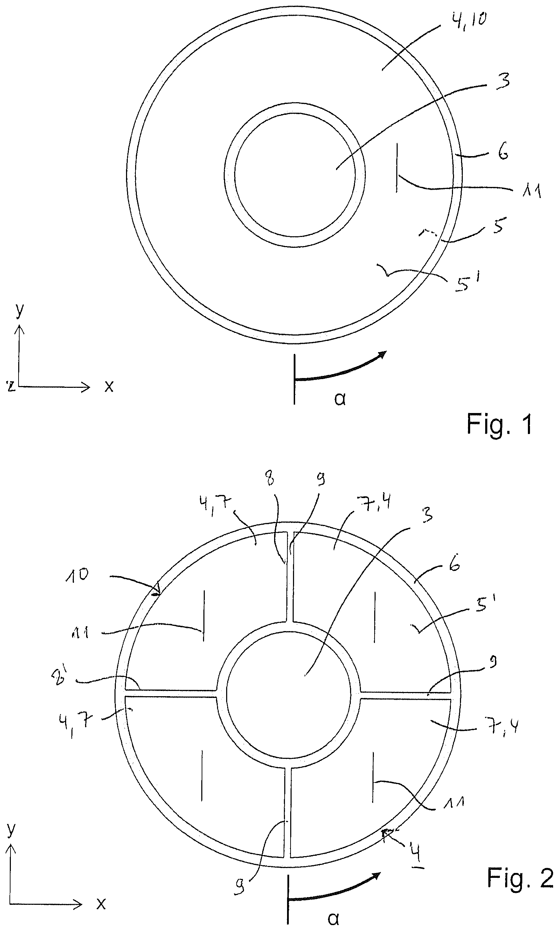

Fig. 1 zeigt ein einstückiges Messelement 4 nach dem Stand der Technik, beispielsweise ein piezoelektrisches Messelement 4 in Form einer Scheibe 10, hier in Form einer Lochscheibe 10 mit einer zentralen Aussparung 3. Das Messelement 4 befindet sich vollflächig mit seiner unteren, nicht sichtbaren Fläche 5 auf einer Elektrode 6. Auf der oberen Fläche 5' der Messelement-Scheibe 4 befindet sich eine nicht dargestellte zweite Elektrode 6'. Die Scheibe 10 erstreckt sich in den Richtungen x, y, die Normale dazu wird mit z bezeichnet. Die Kristallausrichtung 11 des Messelements 4 ist in eine beliebige Richtung innerhalb der Fläche x-y ausgerichtet. Diese Kristallausrichtung 11 bezieht sich auf den Schnitt des Kristalls und bezeichnet beispielsweise die Orientierungsrichtung Y oder Z der Kristallstruktur. In der Fig. 1 ist sie in y-Richtung ausgerichtet und als Strich dargestellt. Das Messelement 4 ist derart ausgestaltet, dass eine Kraft Fz, welche in z-Richtung auf die Scheibe 10 wirkt, ein entsprechendes Messsignal erzeugt, welches von den beiden Elektroden 6, 6' an entsprechenden nicht dargestellten Leitungen abgenommen werden kann.

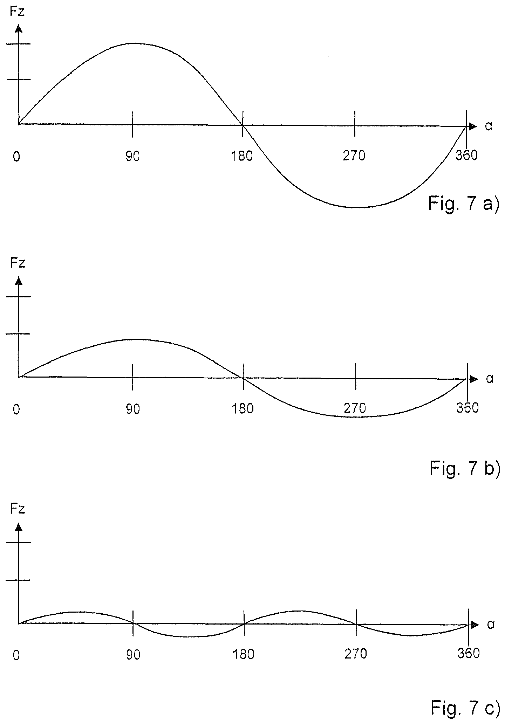

Es hat sich nun gezeigt, dass eine Querkraft Fxy, die senkrecht zur Kraft Fz verläuft, ungewollt eine gewisse Menge Ladungsquanten erzeugt, die sich an den Elektroden 6, 6' ansammelt und zu einem Fehlsignal führt. Dieses Fehlsignal ändert seine Amplitude in Relation der Übereinstimmung von der Ausrichtung der Kristallstruktur 11 und der Richtung α in der x-y Ebene, von der die Querkraft Fxy eingeleitet wird, in Sinus Form. Fig. 7a zeigt die Amplitude des Störsignals Fxy in Abhängigkeit der Übereinstimmung von Einfallswinkel und Kristallausrichtung 11. Verläuft die Kristallstruktur 11 beispielsweise in y-Richtung und die Querkraft Fxy in x-Richtung, so ist das Fehlsignal maximal. Bei paralleler Ausrichtung von Kristallausrichtung 11 und Querkrafteinwirkung Fxy ist das Fehlsignal entsprechend null.

Fig. 2 zeigt eine erfindungsgemässe Ausgestaltung eines Messelements 4, ebenfalls auf einer Elektrode 6 und unter einer nicht dargestellten Elektrode 6', welche auf der sichtbaren Fläche 5' des Messelements 4 liegt. Dieses Messelement 4 ist, wie auch das Messelement der Fig. 1, ein piezoelektrisches Messelement aus einem Kristall der Symmetrieklasse 32, insbesondere aus Quarz. Es ist flach ausgestaltet in einer Ebene x-y zum Einbauen in einen Messkörper, zum Messen einer Kraft Fz, welche senkrecht auf die Ebene x-y wirkt.

Im Gegensatz zum Messelement in Fig. 1 ist dieses Messelement 4 in vier gleichartige Messelement-Segmente 7 unterteilt. Diese können beispielsweise derart hergestellt werden, indem eine Lochscheibe nach Fig. 1 zweimal in zueinander orthogonalen Schnitten durch das Zentrum zersägt wird. Die Ausrichtungen der Kristallstruktur 11 der Scheibe 10 resp. ihrer Segmente 7, dargestellt in den Strichen, sind auch hier alle gleichgerichtet. Sie verlaufen ebenfalls alle in y-Richtung, parallel zueinander.

Die Messelement-Segmente 7 liegen in der x-y Ebene und weisen gerade Flanken 8, 8' auf, an denen sie, beabstandet durch schmale Spalte 9, nahe an ihren benachbarten Segmenten 7 angeordnet sind. Die Spaltbreiten 9 können beispielsweise der Breite der Sägeblätter entsprechen, die beim Zersägen der Scheibe 10 verwendet werden. Die Segmente 7 bilden in ihrer Anordnung zwischen den Elektroden 6, 6' zusammen mit den Spalten 9 die Form einer Scheibe oder Lochscheibe 10, mit oder ohne mittiger Aussparung 3.

In der Anwendung wirkt eine Kraft Fz senkrecht auf das Messelement 4 resp. auf die Elektroden 6', 6 der Segmente 7. Das piezoelektrische Messelement 4 erzeugt positive und negative Ladungsquanten an den Oberflächen 5, 5' und leitet diese weiter an die mit den Oberflächen 5, 5' in elektrischem Kontakt stehenden Elektroden 6, 6', welche die Ladungen sammeln. Diese geben die Ladungen schliesslich zur Auswertung an nicht dargestellte Leitungen weiter, welche mit ihnen in elektrischem Kontakt stehen.

Es hat sich nun gezeigt, dass die Amplitude des maximalen Störsignals etwa halbiert wird, wenn das Messelement 4 anstelle von einstückig, wie in Fig. 1 dargestellt, in vier Segmente 7 unterteilt ist, wie in Fig. 2 dargestellt. Die Amplitude eines entsprechenden Störsignals durch eine Störkraft Fxy in einem Messelement mit vier Segmenten 7 nach Fig. 2 ist in Fig. 7b dargestellt.

Bei der Segmentierung sollte natürlich darauf geachtet werden, dass die Gesamtfläche der Messelement-Scheibe 10 nicht zu stark reduziert wird, damit die Belastbarkeit des Messelements nicht wesentlich reduziert wird. In der Regel sollten die Spalte 9 zwischen den Segmenten 7 nicht mehr als 20% der Gesamtfläche der Scheibe oder Lochscheibe 10 ausmachen, vorzugsweise nicht mehr als 10%. Die Segmente 7 dürfen sich in ihrer Anordnung als theoretische Scheibe 10 aber nicht berühren, da sonst erneut Fehler auftreten. Die Segmente 7 bedecken entsprechend mindestens 80% der vollen Lochscheiben-Fläche 10, vorzugsweise mindestens 90%.

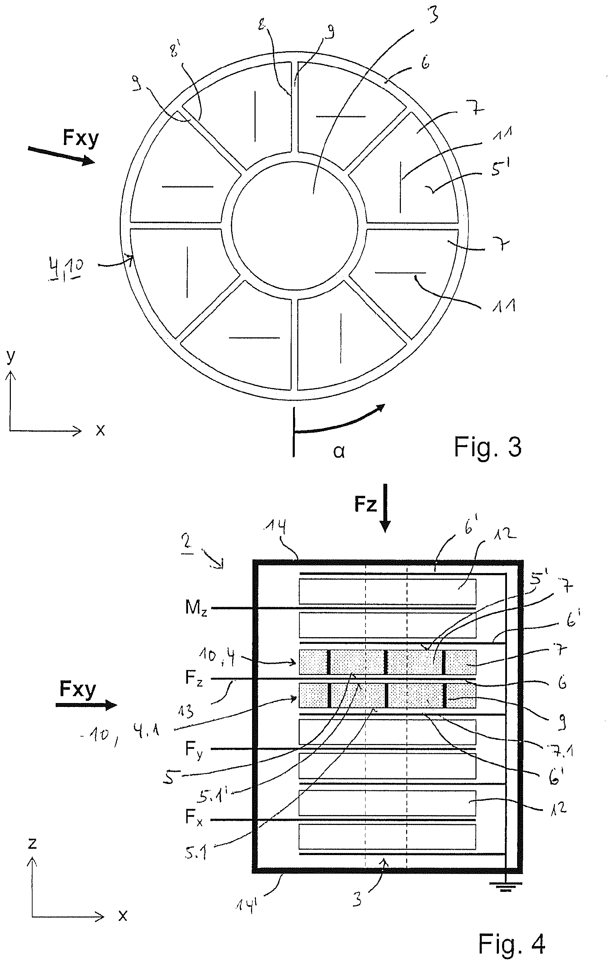

Fig. 3 zeigt ein erfindungsgemässes Messelement gemäss Fig. 2, das aber in acht Segmente 7 unterteilt ist. Während die Kristallausrichtungen 11 aller Segmente 7 in Fig. 2 in dieselbe Richtung in der x-y Ebene ausgerichtet sind, parallel zueinander in y-Richtung, sind in Fig. 3 erfindungsgemäss die Kristallausrichtungen 11 benachbarter Segmente 7 in alternierende Richtungen der x-y Ebene orthogonal zueinander ausgerichtet.

Eine Querkraft Fxy verursacht dann ein Fehlsignal an einem Segment 7, das teilweise wieder von einem anderen Segment 7 aufgehoben wird. Die Segmente 7 können für die Anordnung der Fig. 3 ebenfalls durch Zersägen einer vollen, einstückigen Scheibe 10 entstehen, wobei anschliessend beispielsweise jedes zweite Segment 7 entnommen, um 90 Grad gedreht und an die übernächste Stelle in Drehrichtung wieder abgelegt wird.

Die Elektroden 6, 6' können durchgehend als Scheiben oder Lochscheiben ausgebildet sein, wie in den Figuren dargestellt. Sie bedecken dabei beidseits der Segmente 7 mindestens die Oberfläche der Scheibe oder Lochscheibe 10 durchgehend.

Fig. 7c) zeigt die Amplitude eines Störsignals durch eine Störkraft Fxy in einem Messelement mit acht Segmenten 7 nach Fig. 3, in Abhängigkeit der Einfallsrichtung der Störkraft Fxy, wobei die Segmente 7 unterschiedliche Kristallausrichtungen aufweisen. Die Amplitude des Störsignals beträgt hier noch etwa ein Achtel des ursprünglichen Störsignals von Fig. 1.

Dabei sollte aber stets darauf geachtet werden, dass alle Segmente 7 eines Messelementes 4 gleichartig sind. Gleichartig bedeutet, dass sie aus identischem Material sind und dieselben Empfindlichkeiten aufweisen bei einer Krafteinwirkung bezüglich der Z-Richtung. Auch ihre Formen und Abmessungen sind identisch. Einzig in ihrer Kristallausrichtung 11 in Relation zur Anordnung im Messelement 4 können sie sich unterscheiden, entsprechend der ursprünglichen Lage der einzelnen Segmente vor dem Zersägen der Scheibe. Die Kristallausrichtung 11 kann beispielsweise parallel oder quer zu einer Flanke 8 oder 8' ausgerichtet sein.

Es ist vorgesehen, dass ein erfindungsgemässes Messelement 4 unter Vorspannung in einen Messkörper 2 eingebaut wird, wie in Fig. 4 dargstellt.

Vorzugsweise werden dazu jeweils zwei erfindungsgemässe Messelemente 4, 4.1, die auf ihren Kraft aufnehmenden Flächen 5, 5.1' aufeinander liegend angeordnet sind, verwendet. Ihre Polarisationsrichtungen sind dazu in der Regel entgegengesetzt ausgerichtet. Die Messelemente 4, 4.1 weisen somit eine gemeinsame zwischen ihnen angeordnete Elektrode 6 auf, welche mit einer Messsignalleitung 13 elektrisch verbunden ist. Diese leitet das Signal der Kraftkomponente Fz zu einem Verstärker, Wandler und/oder Auswertegerät.

Der Messkörper 2 kann insbesondere weitere Messelemente 12 umfassen, welche weitere Kraftkomponenten und/oder Momentkomponenten ermitteln können. In Fig. 4 sind insbesondere Messelementpaare für die Bestimmung der Kräfte Fx in der x-Richtung und Fy in der y-Richtung sowie ein Messelementpaar Mz für die Bestimmung des Momentes in Z-Richtung vorgesehen. Der Messkörper 2 ist unter Vorspannung ausgestaltet, was aus der Figur aus Gründen der Übersichtlichkeit nicht entnommen werden kann. Alle Messelemente 4, 4.1, 12 sind in Scheiben oder Lochscheiben 10 ausgestaltet und weisen dieselben Aussen- und allenfalls Innendurchmesser auf. Durch die Vorspannung in z-Richtung liegen sie fest mit ihren Flächen 5.1, 5.1', 5, 5' auf den ihnen angrenzenden Elektroden 6, 6' an. Dieser Sachverhalt geht wiederum aus Gründen der Übersichtlichkeit aus Fig. 4 nicht hervor. Die Elektroden 6' sind in diesem Messkörper 2 alle miteinander sowie mit der Masse elektrisch verbunden.

Es ist dabei zu beachten, dass nur die Messelemente 4, 4.1, welche für die Messung der Kraftkomponente in z-Richtung vorgesehen sind, in Segmente 7 unterteilt sind, nicht aber die andern Messelemente 12, welche die Kräfte Fx, Fy oder das Moment Mz messen sollen. Das Übersprechen der Messsignale tritt bei den anderen Komponenten nicht so stark auf, dass die dadurch entstandenen Fehler korrigiert werden müssten.

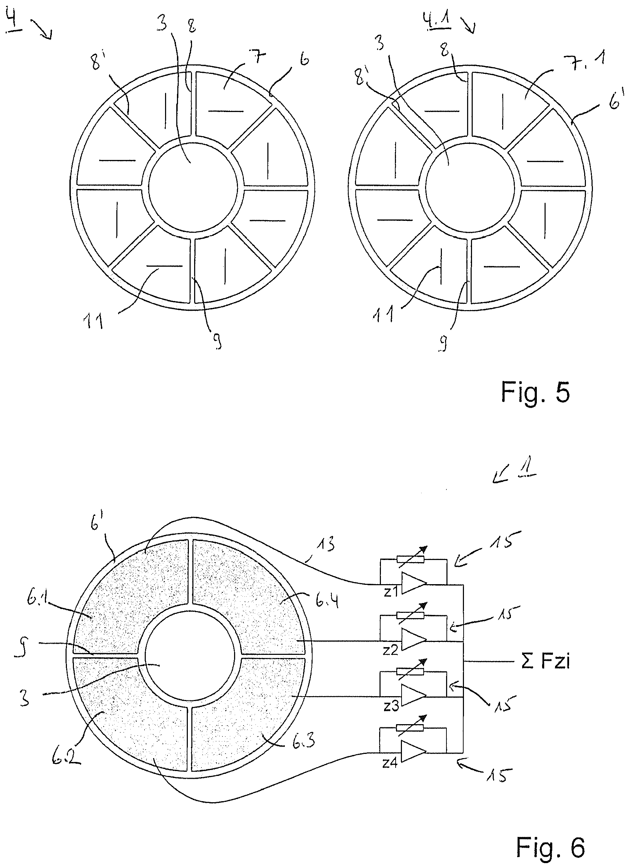

Bei der Anordnung von zwei Messelementen 4, 4.1 in einem Turm kann erfindungsgemäss darauf geachtet werden, dass jeweils zwei Segmente 7, 7.1, die sich an der Elektrode 6 gegenüber liegen, orthogonal zueinander ausgerichtet sind bezüglich ihrer Kristallstruktur 11, wie in Fig. 5 dargestellt. Die beiden Messelemente 4, 4.1 sind identisch, sie sind einzig um 90° zueinander gedreht angeordnet. Es hat sich gezeigt, dass der durch das Übersprechen verursachte Messfehler auf diese Art minimal ist, weil sich die einzelnen Fehler so am effizientesten aufheben.

Erfindungsgemäss kann eine Messelektrode 6 auch aus mehreren elektrisch voneinander getrennten Teilelektroden 6a, 6b, 6c und 6d bestehen, wie in Fig. 6 dargestellt. Diese bedecken jeweils nur genau eine Kraft aufnehmende Fläche 5.1 (nicht sichtbar) eines Messelement-Segments 7.1 (nicht sichtbar), wobei alle Teilelektroden 6a, 6b, 6c, 6d, elektrisch getrennt von einander weiter geführt sind zur weiteren Verarbeitung. Insbesondere werden diese Signale einzeln in Messsignalverstärkern 15 zu jeweiligen Kräften Fzi verstärkt, wobei i für 1, 2, 3 und 4 steht, und erst anschliessend zusammengeführt, um schliesslich das Signal Fz zu erhalten.

### Bezugszeichenliste

1 Messanordnung
2 Messkörper
3 zentrale, kreisrunde Aussparung
4 4.1 Messelement, Scheibe
5 5'; 5.1; 5.1' Kraft aufnehmende Fläche des Messelements
6 6'; 6.1; 6.2; 6.3; 6.4 Elektrode
7 7.1 Segment des Messelements
8 8' Flanke des Segments
9 Spalt, Zwischenraum
10 Scheibe oder Lochscheibe
11 Kristallausrichtung
12 Weitere Messelemente zum Erfassen von Kräften Fx, Fy oder eines Momentes Mz
13 Leitung, Messleitung
14 14' Kraft einleitende Fläche des Messkörpers
15 Messsignalverstärker
x Koordinate quer zur Krafteinleitungsrichtung Fz
y Koordinate quer zur Krafteinleitungsrichtung Fz
z Koordinate parallel zur Krafteinleitungsrichtung Fz
X kristallographische X-Achse des piezoelektrischen Kristalls
Fxy Kraft F in der x-y-Ebene, die eine Störkraft verursacht
Fz Kraft F in Richtung z, die gemessen werden soll

## Patentansprüche

1. Messelement aus einem piezoelektrischen Kristall der Symmetrieklasse 32, insbesondere aus Quarz, flach ausgestaltet in einer Ebene x-y zum Einbauen in einen Messkörper (2) zum Messen einer Kraft Fz, welche senkrecht auf die Ebene x-y wirkt, wobei eine Kraft Fz eine Ladungsansammlung auf den Kraft aufnehmenden Flächen (5, 5') des Messelements verursacht, welche mit Elektroden (6, 6') versehen ist, wobei bei einer Messung Querkräfte Fxy orthogonal zur Kraft Fz auf den Messkörper (2) zu erwarten sind, welche ein Fehlsignal am Messelement erzeugen, **dadurch gekennzeichnet, dass** das Messelement aus mindestens vier, vorzugsweise aus acht gleichartigen Messelement-Segmenten (7) mit geraden Flanken (8, 8') besteht, wobei die Segmente (7) in der x-y Ebene nebeneinander und durch schmale Spalte (9) an den Flanken (8, 8') beabstandet voneinander nahe aneinander angeordnet sind, wobei sie zusammen die Form einer Scheibe oder Lochscheibe (10) bilden zum Reduzieren der Störsignale durch Querkräfte Fxy auf das Messelement, und wobei die Kristallausrichtung (11) in der x-y Ebene jedes Segment (7) parallel oder orthogonal zur Kristallausrichtung (11) jedes anderen Segments (7) ausgerichtet ist.

2. Messelement nach Anspruch 1, **dadurch gekennzeichnet, dass** die Fläche der Scheibe oder Lochscheibe (10) zu mindestens 80%, vorzugsweise zu mindestens 90% von den Segmenten (7) bedeckt ist.

3. Messelement nach Anspruch 1 oder 2, **dadurch gekennzeichnet, dass** die gleichartigen Messelement-Segmente (7), zueinander identisch sind bezüglich ihrer Materialbeschaffenheit, Form, Abmessungen und Empfindlichkeiten.

4. Messelement nach einem der vorhergehenden Ansprüche, **dadurch gekennzeichnet, dass** die Polarisationsausrichtungen aller nebeneinander ausgelegten Messelement-Segmenten (7) in dieselbe Richtung ausgerichtet sind.

5. Messelement nach einem der vorhergehenden Ansprüche, **dadurch gekennzeichnet, dass** die Kristallausrichtungen (11) benachbarter Segmente (7) in alternierende Richtungen in der x-y Ebene orthogonal zueinander ausgerichtet sind.

6. Messelement nach einem der vorhergehenden Ansprüche, **dadurch gekennzeichnet, dass** alle Messelement-Segmente (7) elektrisch parallel zueinander geschalten sind, zum Aufsummieren der Teilsignale aller Messelement-Segmente (7).

7. Messelement nach einem der vorhergehenden Ansprüche, **dadurch gekennzeichnet, dass** beide Elektroden (6, 6') beidseits der Segmente (7) mindestens die Oberfläche der Scheibe oder Lochscheibe (10) durchgehend bedecken.

8. Messelement nach einem der Ansprüche 1 bis 5, **dadurch gekennzeichnet, dass** eine oder beide der Elektroden (6, 6') des Messelements (7) aus mehreren elektrisch voneinander getrennten Teilelektroden (6a, 6b, ...) bestehen, welche jeweils nur genau eine Kraft aufnehmende Fläche (5, 5') eines Messelement-Segments (7) bedecken, wobei alle Teilelektroden (6a, 6b, ...) elektrisch getrennt von einander weiter geführt sind zur weiteren Verarbeitung und späteren Summierung der Teilkraftsignale zu Fz.

9. Messkörper umfassend zwei Messelemente (4, 4.1) nach einem der vorhergehenden Ansprüche, **dadurch gekennzeichnet, dass** sie auf ihren Kraft aufnehmenden Flächen (5', 5.1') aufeinander liegend angeordnet sind und eine gemeinsame zwischen ihnen angeordnete Elektrode (6) aufweisen.

10. Messkörper nach Anspruch 9, **dadurch gekennzeichnet, dass** die Kristallausrichtung (11, 11.1) benachbarter Segmente (7, 7.1) aus verschiedenen Messelementen (4, 4.1) orthogonal zueinander ausgerichtet sind.

11. Messkörper nach einem der Ansprüche 9 oder 10, umfassend weitere Messelemente (12) zum Erfassen von Kräften Fx und/oder Fy und/oder eines Momentes Mz.

12. Messkörper nach Anspruch 11, **dadurch gekennzeichnet, dass** alle weiteren Messelemente (12) für Fx, Fy, oder Mz einstückig ausgestaltete Scheiben oder Lochscheiben (10) sind.

13. Messkörper (2) nach einem der Ansprüche 9 bis 12, **dadurch gekennzeichnet, dass** die Kraft einleitenden Flächen (14, 14') des Messkörpers (2) parallel zu den Druck- oder Kraft- aufnehmenden Flächen (5, 5') der Messelemente (4) sind.

14. Messanordnung umfassend einen Messkörper (2) nach einem der Ansprüche 11 bis 13 mit getrennten Teilelektroden nach Anspruch 6 sowie umfassend mehrere Messsignalverstärker (15), **dadurch gekennzeichnet, dass** jede elektrisch getrennt geführte Teilelektrode (6a, 6a', 6b, 6b', ...) an einem eigenen Messsignalverstärker (15) angeschlossen ist zum Umwandeln der Messsignale.

15. Verwendung eines Messkörpers (2) nach einem der vorhergehenden Ansprüche 9 bis 14 in einem Werkzeug, insbesondere in einem Fräs- oder Hobelwerkzeug zur Bestimmung der auftretenden Kräfte orthogonal zur Bearbeitungsrichtung.

## Claims

1. A measuring element consisting of a crystal class 32 piezoelectric crystal, in particular of quartz, having a planar shape in a plane x-y for installation in a measuring body (2) for measuring a force Fz acting vertically on the plane x-y, wherein a force Fz generates an accumulation of charges on the force-receiving surfaces (5, 5') of the measuring element provided with electrodes (6, 6'), wherein in a measurement transversal forces Fxy that act in a direction orthogonal to the force Fz on the measuring body (2) are to be expected generating an erroneous signal at the measuring element, **characterized in that** the measuring element consists of at least four, preferably of eight identical measuring element segments (7) having straight flanks (8, 8'), wherein the segments (7) are arranged in the plane x-y side by side in close proximity to each other and spaced apart by a narrow gap (9) at the flanks (8, 8'), together forming a disc or perforated disc (10) for reducing the interference signals by transversal forces Fxy acting on the measuring element, and wherein the crystallographic orientation (11) in the x-y plane of each segment (7) is parallel or orthogonal to the crystallographic orientation (11) of each of the other segments.

2. The measuring element according to claim 1, **characterized in that** at least 80%, preferably at least 90% of the surface of the disc or perforated disc (10) is covered by the segments (7).

3. The measuring element according to claim 1 or 2, **characterized in that** the identical measuring element segments (7) are identical to each other with respect to their material characteristics, shape, dimensions and sensitivities.

4. The measuring element according to any of the preceding claims, **characterized in that** the polarization directions of all measuring element segments (7) disposed in proximity to each other are oriented in the same direction.

5. The measuring element according to any of the preceding claims, **characterized in that** the crystallographic orientations (11) of adjacent segments (7) are oriented in alternating directions in the x-y plane orthogonal to each other.

6. The measuring element according to any of the preceding claims, **characterized in that** all measuring element segments (7) are electrically connected in parallel for summing up the partial signals of all measuring element segments (7).

7. The measuring element according to any of the preceding claims, **characterized in that** both electrodes (6, 6') on the both sides of the segments (7) continuously cover at least the surface of the disc or perforated disc (10).

8. The measuring element according to any of claims 1 to 5, **characterized in that** one or both of the electrodes (6, 6') of the measuring element (7) is made of a plurality of electrically separated partial electrodes (6a, 6b, ...) each covering exactly one force-receiving surface (5, 5') of a measuring element segment (7) wherein all partial electrodes (6a, 6b, ...) continue in an electrically separated manner for further processing and later summing-up of the partial force signals to obtain Fz.

9. A measuring body comprising two measuring elements (4, 4.1) according to any of the preceding claims, **characterized in that** they are arranged one on top of the other with their force-receiving surfaces (5', 5.1') and comprise a common intervening electrode (6) arranged between them.

10. The measuring body according to claim 9, **characterized in that** the crystallographic orientations (11, 11.1) of adjacent segments (7, 7.1) of different measuring elements (4, 4.1) are orthogonal to each other.

11. The measuring body according to any of claims 9 or 10 comprising further measuring elements (12) for detecting forces Fx and/or Fy and/or a moment Mz.

12. The measuring body according to claim 11, **characterized in that** all further measuring elements (12) for measuring Fx, Fy, or Mz are integrally formed discs or perforated discs (10).

13. The measuring body (2) according to any of claims 9 to 12, **characterized in that** the force-introducing surfaces (14, 14') of the measuring body (2) are parallel to the pressure- or force-receiving surfaces (5, 5') of the measuring elements (4).

14. A measuring arrangement comprising a measuring body (2) according to any of claims 11 to 13 having separate partial electrodes according to claim 6, and comprising a plurality of measurement signal amplifiers (15) **characterized in that** each electrically separated partial electrode (6a, 6a', 6b, 6b', ...) is connected to a separate measurement signal amplifier (15) for converting the measurement signals.

15. The use of a measuring body (2) according to any of the preceding claims 9 to 15 in a tool, particularly in a milling or planing tool, for determining the forces acting in a direction orthogonal to the machining direction.

## Revendications

1. Élément de mesure d'un cristal piézoélectrique de la classe cristalline 32, en particulière de quartz, formé d'une manière plate dans un plan x-y, destiné à être monté dans un corps de mesure (2) pour mesurer une force Fz agissant verticalement sur le plan x-y, dans lequel une force Fz provoque une accumulation des charges sur les surfaces recevant les forces (5, 5') de l'élément de mesure pourvu des électrodes (6, 6'), mesures pour lesquelles on attend que des forces transversales Fxy agissent dans le sens orthogonal à la force Fz sur le corps de mesure (2), lesquelles forces produisant un signal erroné sur l'élément de mesure, **caractérisé en ce que** l'élément de mesure consiste en au moins quatre, de préférence en huit segments d'élément de mesure (7) identiques ayant des flancs droits (8, 8'), lesdits segments (7) étant disposés dans le plan x-y de manière à être adjacent les uns aux autres et écartés par des fentes étroites (9) au niveau des flancs (8, 8'), l'ensemble présentant la forme d'un disque ou d'un disque perforé (10) pour réduire les signaux perturbateurs causés par des forces transversales Fxy sur l'élément de mesure, et dans lequel l'orientation cristallographique (11) de chacun des segments (7) dans le plan x-y est parallèle ou orthogonale aux orientations cristallographiques (11) de chaque autre segment.

2. Elément de mesure selon la revendication 1, **caractérisé en ce qu'**au moins 80%, de préférence au moins 90% de la surface du disque ou du disque perforé (10) sont recouvertes par les segments (7).

3. Elément de mesure selon la revendication 1 ou 2, **caractérisé en ce que** les segments d'élément de mesure (7) identiques sont identiques les uns aux autres en ce qui concerne leurs caractéristiques de matériau, leur forme, leurs dimensions et leurs sensibilités.

4. Elément de mesure selon l'une quelconque des revendications précédentes, **caractérisé en ce que** les directions de polarisation de tous les segments d'élément de mesure (7) disposés adjacents les uns aux autres sont orientées dans le même sens.

5. Elément de mesure selon l'une quelconque des revendications précédentes, **caractérisé en ce que** les orientations cristallographiques (11) des segments adjacents (7) sont orientées dans des directions alternées dans le plan x-y orthogonaux les unes aux autres.

6. Elément de mesure selon l'une des revendications précédentes, **caractérisé en ce que** tous les segments d'élément de mesure (7) sont connectés électriquement en parallèle pour sommer les signaux partiels de tous les segments d'élément de mesure (7).

7. Elément de mesure selon l'une quelconque des revendications précédentes, **caractérisé en ce que** les deux électrodes (6, 6') situées de part et d'autre des segments (7) recouvrent en continu au moins la surface du disque ou du disque perforé (10).

8. Elément de mesure selon l'une quelconque des revendications 1 à 5, **caractérisé en ce que** l'une ou les deux électrodes (6, 6') de l'élément de mesure (7) sont constituées d'une pluralité d'électrodes partielles électriquement séparées (6a, 6b, ...) chacune couvrant exactement une seule surface (5, 5') recevant la force d'un segment d'élément de mesure (7) dans lequel toutes les électrodes partielles (6a, 6b, ...) continuent de manière électriquement séparée pour un traitement ultérieur subséquent en sommant les signaux de force partielles pour obtenir Fz.

9. Corps de mesure comprenant deux éléments de mesure (4, 4.1) selon l'une quelconque des revendications précédentes, **caractérisé en ce qu'**ils sont superposés au niveau de leurs surfaces (5', 5.1') recevant la force et comprennent une électrode (6) commune intermédiaire entre eux.

10. Corps de mesure selon la revendication 9, **caractérisé en ce que** les orientations cristallographiques (11, 11.1) de segments (7, 7.1) adjacents d'éléments de mesure (4, 4.1) différents sont orthogonales les unes aux autres.

11. Corps de mesure selon l'une quelconque des revendications 9 ou 10, comprenant des éléments de mesure (12) additionnels pour détecter des forces Fx et/ou Fy et/ou un moment Mz.

12. Corps de mesure selon la revendication 11, **caractérisé en ce que** tous les éléments de mesure (12) additionnels destinés à mesurer Fx, Fy ou Mz sont des disques ou des disques perforés (10) intégralement formés.

13. Corps de mesure (2) selon l'une quelconque des revendications 9 à 12, **caractérisé en ce que** les surfaces (14, 14') introduisant la force du corps de mesure (2) sont parallèles aux surfaces (5, 5') recevant des pressions ou des forces des éléments de mesure (4).

14. Dispositif de mesure comprenant un corps de mesure (2) selon l'une quelconque des revendications 11 à 13 avec des électrodes partielles séparées selon la revendication 6, et comprenant une pluralité d'amplificateurs de signal de mesure (15), **caractérisé en ce que** chaque électrode partielle (6a, 6a', 6b, 6b', ...) électriquement séparée est connectée à son propre amplificateur de signal de mesure (15) associé pour convertir les signaux de mesure.

15. Utilisation d'un corps de mesure (2) selon l'une quelconque des revendications précédentes 9 à 15 dans un outil, en particulier dans un outil de fraisage ou de rabotage, pour déterminer les forces agissant dans une direction orthogonale à la direction d'usinage.
